# EUROPÄISCHE PATENTANMELDUNG

(11) **EP 0 603 134 A1**
(43) Veröffentlichungstag der Anmeldung: **22.06.1994**
(21) Anmeldenummer: 93810869.3
(22) Anmeldetag: 10.12.1993
(51) Int. Cl.: H01R 9/07, H01R 4/24, H02B 1/20

(54) **Stromverteilungsanlage, insbesondere für Beleuchtungszwecke**

(30) Priorität: 18.12.1992 CH 3862/92
(71) Anmelder: OPTELMA AG, CH-4537 Wiedlisbach (CH)
(72) Erfinder: Brux, Bernard Alain, F-92600 Asnières (FR); Gourdon, Philippe, F-75012 Paris (FR); Jost, Werner, CH-4500 Solothurn (CH)

(57) **Zusammenfassung**

Bei dieser Stromverteilungsanlage wird ein flexibles Bandkabel (1) als Speiseleitung verwendet, das völlig berührungsgeschützt ausgebildet ist. Für die Stromabnahme dient ein Adapter (7), der an jeder beliebigen Stelle der Speiseleitung angesetzt werden kann. Im Adapter sind verschraubbare Kontaktorgane (8) vorgesehen, deren Spitzen die Isolation des Bandkabels durchdringen können und damit in frei wählbarer Weise mit den Leitern des Kabels elektrischen Kontakt herstellen können.

## Beschreibung

Die Erfindung betrifft eine sehr vielseitig verwendbare Stromverteilungsanlage, vorzugsweise beim Einsatz in Beleuchtungssystemen.

Bei den bekannten Stromverteilungssystemen, die in einem Gebäude für die Speisung aller möglichen Verbraucher dienen, muss vorausgehend eine genaue Planung vorgenommen werden, da für die Stromabnahme von einer Speiseleitung Anzapfstellen vorzusehen sind, die nachträglich nicht mehr oder nur mit beträchtlichem Aufwand verändert werden können.

Die Erfindung bezweckt insbesondere diesen Nachteil der Notwendigkeit einer genauen Vorplanung zu vermeiden und eine Anlage zu schaffen, bei der jederzeit an einer beliebigen Stelle der im Raum fertig verlegten Speiseleitung eine Stromabnahme für beliebige Verbraucher vorgesehen werden kann.

Die wesentlichen Merkmale der Erfindung ergeben sich aus den Patentanspruch 1 Ein Ausführungsbeispiel des Erfindungsgegenstandes wird anhand der Zeichnung näher erläutert, in dieser zeigen:
Fig. 1 eine dreiphasige Speiseleitung,
Fig. 2 und 3 Verlegungsmöglichkeiten an einer Anzapfstelle,
Fig. 4 vergrösserte Darstellung einer Anzapfstelle.
Fig. 5 und 6 Stecker für die Anzapfstelle.

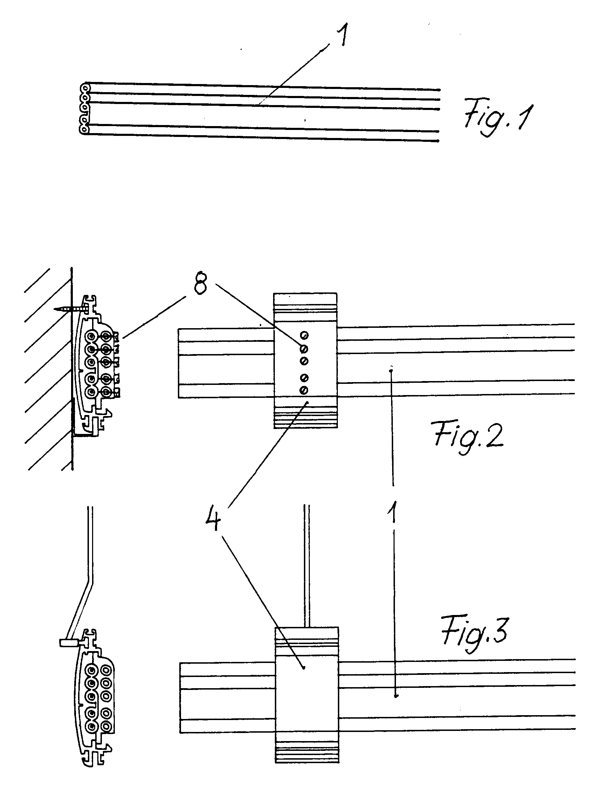

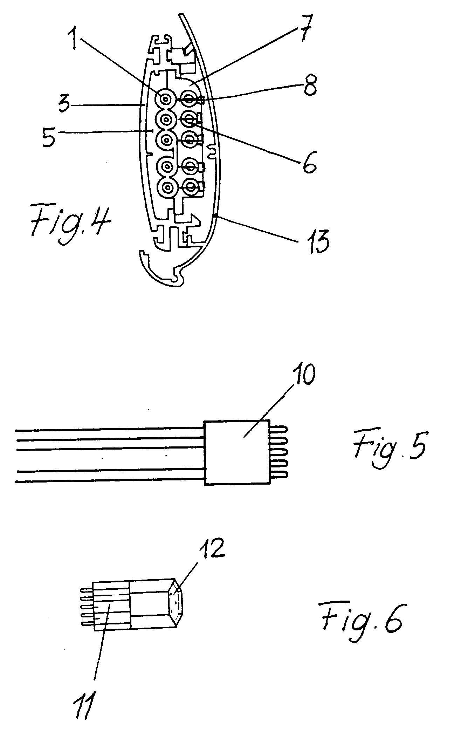

Bei dem nachstehend beschriebenen Ausführungsbeispiel wird als Speiseleitung für ein Dreiphasensystem ein Flachkabel 1 verwendet, das neben den drei Phasenleitern noch einen Null- und einen Erdleiter aufweist (Fig. 1). Dieses Flachkabel kann mit grosser Freiheit durch einen oder mehrere Räume geführt werden. Die Speiseleitung kann direkt oder über Distanzhalter an einer Wand befestigt oder an einer Decke aufgehängt werden ( Fig. 2 und 3). Die für die Montage verwendeten Halterungen 4 sind gleichzeitig so ausgebildet, dass sie als Anzapfstellen für die Stromabnahme dienen können. Wie aus Fig. 4 im Detail ersichtlich, ist in einem Trägerprofil 3 ein Kunststoffprofil 5 gehalten, das eine zum Flachkabel 1 komplementäre Oberflächenform aufweist, so dass dieses formschlüssig im Profil 5 sitzt. Auf der Gegenseite des Kabels ist, ebenfalls mit komplementärer Oberflächenform, der für die Stromabnahme dienende Adapter 7 angesetzt. In diesem sind,den fünf Leitern des Kabels ensprechend, Kontakthülsen 6 eingesetzt, welche von Kontaktschrauben 8 durchsetzt werden. Diese Kontaktschrauben 8 durchdringen mit ihren Spitzen beim Einschrauben die Isolation des jeweiligen Kabel- Leiters, so dass eine elektrische Verbindung zwischen diesem und der entsprechenden Kontakthülse 6 hergestellt wird.

Mit Hilfe eines fünfpoligen Kontaktsteckers 10 ( Fig. 5 ) kann eine Verzweigung der im Adapter abgegriffenen Spannungen gebildet werden oder es kann mittels eines Anpassteils 11 (Fig.6) eine Steckdose 12 für den Anschluss von beliebigen Verbrauchern gebildet werden.

Es ist klar, dass mit diesem in einen Halteteil 4 integrierten Adapter 7 zu jeder Zeit und an einer beliebigen Stelle der Speiseleitung 1 eine Spannung verfügbar wird, und zwar nach freier Wahl mit einer oder mehreren Phasen.

Wie aus Fig. 4 ersichtlich, kann am Halter 4 noch eine sich über einen grösseren Abschnitt der Speiseleitung 1 erstreckende Abdeckung 13 gehaltert werden, die aus einem dekorativ wirkenden Alu- oder Kunststoffprofil besteht. Diese Abdeckung l₃ eignet sich besonders auch für die Anbringung von Beleuchtungskörpern, die sehr einfach aus dem unter der Abdeckung liegenden Adapter 7 gespeist werden können.

Da am Bandkabel keinerlei mit blanken Teilen ausgerüstete Kontaktstellen vorbereitet sind, ist das System komplett berührungsgeschützt ausgebildet.

## Patentansprüche

1. Universell verwendbare Stromverteilungsanlage, dadurch gekennzeichnet, dass eine als mehradriges Stromkabel (1) ausgebildete Speiseleitung und ein für die Stromabnahme dienender Adapter (7) so aufeinander abgestimmt sind, dass mit letzterem an jeder beliebigen Stelle der Speiseleitung, ohne irgendwelche Vorkehren an dieser, frei wählbare Spannungen abgenommen werden können, derart dass die ganze Anlage völlig berührungsgeschützt ausgebildet ist.

2. Stromverteilungsanlage nach Patentanspruch 1, dadurch gekennzeichnet, dass die Speiseleitung als Bandkabel ausgebildet ist, das zwischen dem mit verschraubbaren Kontaktorganen (8) ausgerüsteten Adapter (7) und einem Profilstück (5) gehalten ist, wobei der Adapter eine der Anzahl Leiter im Kabel (1) entsprechende, von den Kontaktorganen (8) durchdrungene Kontakthülsen (6) aufweist, an denen die jeweils gewünschten Spannungen abnehmbar sind.
